(19) **Europäisches Patentamt / European Patent Office / Office européen des brevets**

(11) **EP 1 968 202 B1**

(12) **EUROPEAN PATENT SPECIFICATION**

(45) Date of publication and mention
of the grant of the patent:
**10.08.2011 Bulletin 2011/32**

(21) Application number: **06822001.1**

(22) Date of filing: **20.10.2006**

(51) Int Cl.:
***H04B 1/10*** (2006.01)

(86) International application number:
**PCT/JP2006/320940**

(87) International publication number:
**WO 2007/055090 (18.05.2007 Gazette 2007/20)**

(54) **RECEPTION SENSITIVITY DETERMINING APPARATUS**

EMPFANGSEMPFINDLICHKEITS-BESTIMMUNGSVORRICHTUNG

APPAREIL DE DÉTERMINATION DE SENSIBILITÉ DE RÉCEPTION

(84) Designated Contracting States:
**DE FR GB**

(30) Priority: **10.11.2005 JP 2005325912**

(43) Date of publication of application:
**10.09.2008 Bulletin 2008/37**

(73) Proprietor: **Pioneer Corporation
Kanagawa 212-0031 (JP)**

(72) Inventor: **SUGANUMA, Hisashi
Kawagoe-shi
Saitama 350-8555 (JP)**

(74) Representative: **Popp, Eugen
Meissner, Bolte & Partner GbR
Postfach 86 06 24
81633 München (DE)**

(56) References cited:
**EP-A2- 0 522 578      EP-A2- 1 548 707
JP-A- 03 265 221      JP-A- 06 112 851
JP-A- 08 018 468      JP-A- 2002 353 825**

**Description**

[Technical Field]

The present invention relates to a reception sensitivity detection apparatus which is provided, for example, in a radio receiver for receiving radio broadcasts or the like to detect its reception sensitivity.

[Background Art]

Conventionally, such an FM receiver has been suggested which is designed to adj ust a detection output level depending on a variation in reception sensitivity, thereby providing noise suppression effects (see Patent Document 1).

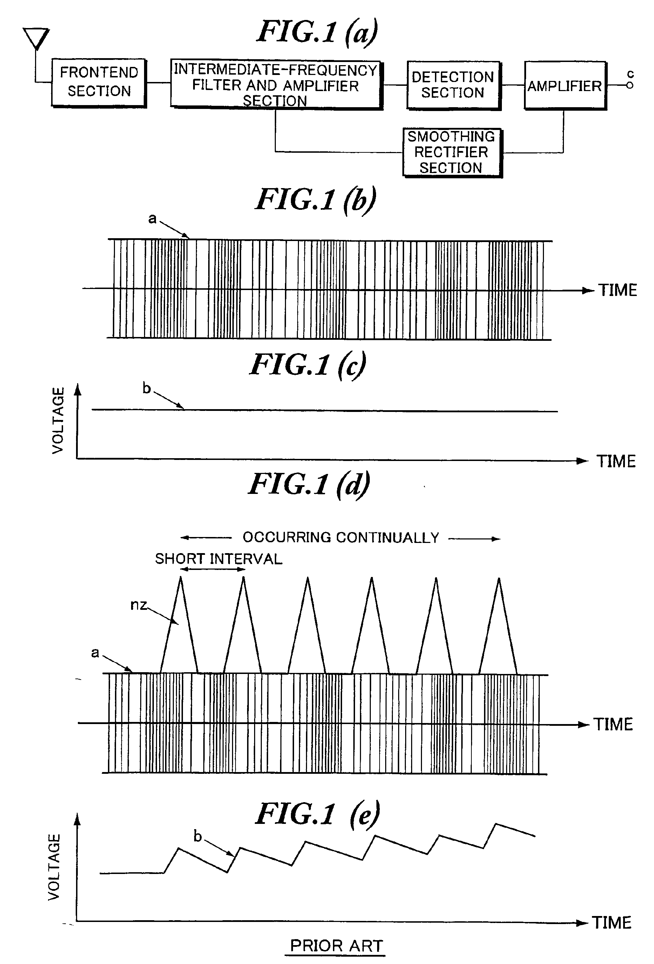

Fig. 1(a) is a block diagram illustrating the basic configuration of this conventional FM receiver. The receiverallows a frontend section to frequency convert an incoming radio wave into an intermediate frequency signal. Then, an intermediate-frequency filter and an amplifier section perform a bandwidth restriction and amplification on the resulting signal so as to convert the signal into an intermediate frequency signal (IF signal) having a desired frequency bandwidth. The IF signal is then detected at a detection section to yield a detection output for output through an amplifier.
Additionally, a smoothing rectifier section serving as reception sensitivity detection means smoothly rectifies the aforementioned IF signal "a" produced at the intermediate-frequency filter and the amplifier section, thereby producing an S meter signal "b" indicative of a reception sensitivity. Based on the voltage level of the S meter signal "b," the amplification factor of the aforementioned amplifier is automatically adjusted, thereby adjusting the level of the detection output.
According to the FM receiver configured in this manner, as schematically illustrated in Figs. 1(b) and 1(c), the amplitude of the IF signal "a" takes a level associated with the reception field intensity of the incoming radio wave and the S meter signal "b" takes a voltage level associated with the amplitude of the IF signal "a." Therefore, automatically adjusting the amplification factor of the amplifier based on the voltage level of the S meter signal "b" is considered possible to output a detection output "c" with a good S/N ratio. Furthermore, the aforementioned smoothing rectifier section smoothly rectifies the IF signal "a," thereby removing an impulsive noise mixed in the IF signal "a" to produce the S meter signal "b." It is thus considered possible to suppress adverse effects such as impulsive noise so that the amplification factor of the amplifier can be automatically adjusted in accordance with an original reception sensitivity.
[Patent Document 1] Japanese Unexamined Patent Application Publication No. Hei 8-18468

[Disclosure of the Invention]

[Problems to be Solved by the Invention]

However, the aforementioned conventional FM receiver may receive under an environment in which high-energy impulsive noises each occurring at short intervals are produced continually for a long duration. In this case, the impulsive noises cannot be sufficiently removed at the aforementioned smoothing rectifier section, causing variations in the voltage level of the S meter signal "b" due to the impulsive noise. It may be thus impossible to obtain the voltage level indicative of the original reception sensitivity.
For example, suppose that the aforementioned conventional FM receiver is incorporated into an automobile. In this case, the receiver will be affected by so-called external noises nz such as ignition noise arising from an automobile igniter, alternator noise arising from a generator, turn signals and horn noise arising from signaling devices, and those noises emitted from other various electrical components.
These external noises nz are high-energy impulsive noises which occur at short intervals continually for a long duration. As shown in Fig. 1(d), when mixed in the IF signal "a," the external noises nz cannot be sufficiently removed only by being smoothly rectified at the aforementioned smoothing rectifier section. Thus, as shown in Fig. 1(e), the voltage level of the S meter signal "b" will not be indicative of the original reception sensitivity, thereby causing a so-called erroneous adjustment to be made to the amplification factor of the amplifier. It is thus impossible to produce the detection output "c" with a good S/N ratio.
Furthermore, in general, the reception sensitivity is a critical parameter which is used in various processing circuits within the receiver. It is thus important to produce an accurate S meter signal with adverse effects of noise suppressed.
The present invention has been developed in view of these conventional problems. It is therefore an object of the invention to provide a reception sensitivity detection apparatus which detects reception sensitivity with improved accuracy.

It is another object of the present invention to provide a receiver which is intended to provide an improved noise suppression effect based on the reception sensitivity detected with an improved accuracy.

[Means for Solving the Problems]

The invention according to claim 1 provides a reception sensitivity detection apparatus for producing a reception sensitivity signal indicative of a reception sensitivity of a received radio wave. The receiver is characterized by including: residual-noise-containing signal generation means for removing a noise component greater than or equal to a predetermined level from those noise components that are contained in an intermediate frequency signal and for producing a residual-noise-containing signal with residual noise components each remaining at a lower level; noise component extracting means for extracting a noise component at a high level, contained in the intermediate frequency signal, as a high-level noise component; noise canceling means for canceling out the residual-noise-containing signal and the high-level noise component to produce a pre-signal; and filter means for filtering the pre-signal to thereby produce a direct current reception sensitivity signal indicative of the reception sensitivity.

The invention of a receiver according to claim 4 is characterized by including automatic reception control means for providing automatic reception control to a detection output based on the reception sensitivity signal produced by the reception sensitivity detection apparatus at least according to claim 1.

The invention according to claim 5 provides a reception sensitivity detection method for producing a reception sensitivity signal indicative of a reception sensitivity of a received radio wave. The method is characterized by including: a residual-noise-containing signal generation step for removing a noise component greater than or equal to a predetermined level from those noise components that are contained in an intermediate frequency signal and for producing a residual-noise-containing signal with residual noise components each remaining at a lower level; a noise component extracting step for extracting a noise component at a high level, contained in the intermediate frequency signal, as a high-level noise component; a noise canceling step for canceling out the residual-noise-containing signal and the high-level noise component to produce a pre-signal; and a filter step for filtering the pre-signal to thereby produce a direct current reception sensitivity signal indicative of the reception sensitivity.

[Brief Description of the Drawings]

Fig. 1 is an explanatory view illustrating the configuration and function of a receiver which includes conventional reception sensitivity detection means.
Fig. 2 shows a block diagram of the configuration of a reception sensitivity detection apparatus according to an embodiment of the present invention and explanatory waveform diagrams of its function.
Fig. 3 is a block diagram illustrating the configuration of a reception sensitivity detection apparatus and a receiver according to an example.
Fig. 4 shows explanatory waveform diagrams of the function of the reception sensitivity detection apparatus shown in Fig. 3.

[Best Mode for Carrying Out the Invention]

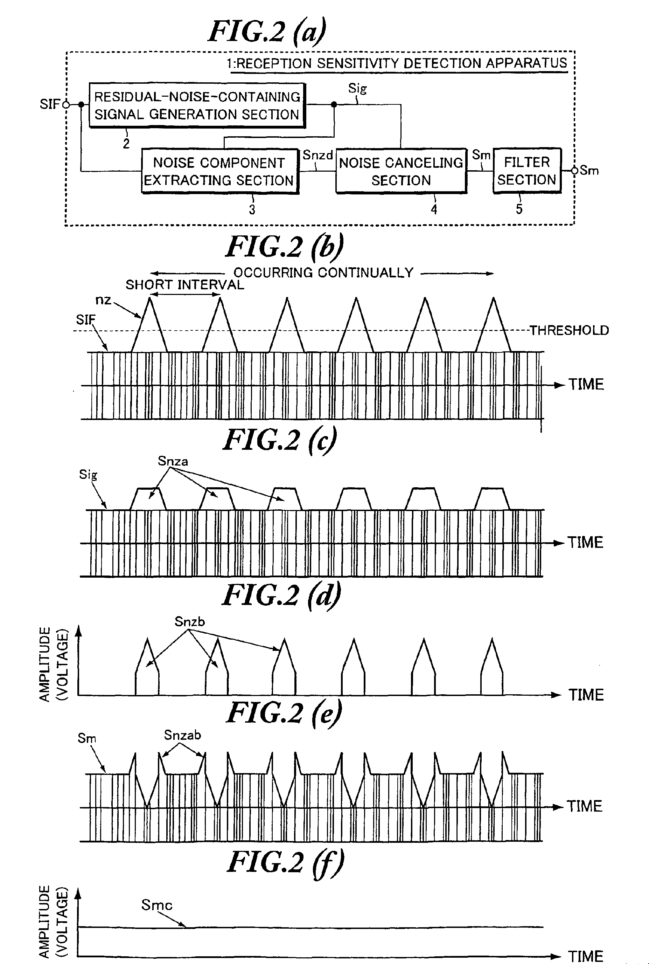

Now, with reference to Fig. 2, a description will be made to a preferred embodiment of the present invention. Fig. 2(a) is a block diagram illustrating the configuration of a reception sensitivity detection apparatus of the present embodiment. Figs.2 (b) to 2 (f) are schematic waveform diagrams illustrating the input or output signal waveform of each component.

In Fig. 2 (a), the reception sensitivity detection apparatus 1 is configured to have a residual-noise-containing signal generation section 2, a noise component extracting section 3, a noise canceling section 4, and a filter section 5, in which a reception sensitivity signal (hereinafter referred to as an "S meter signal") Smc indicative of a reception sensitivity is produced from an intermediate frequency signal (IF signal) SIF.

Here, when the residual-noise-containing signal generation section 2 receives an IF signal SIF mixed with a noise nz, it removes a noise component greater than or equal to a predetermined level from the noise nz to thereby produce and output a residual-noise-containing signal Sighaving a waveform with residual noise components Snza remaining at a lower level. For example, suppose that an IF signal SIF mixed with the noise nz as illustrated in Fig. 2 (b) is received. In this case, as shown in Fig. 2 (c) , each noise component greater than or equal to a predetermined level is removed from each noise nz to thereby output the residual-noise-containing signal Sig with the residual noise components Snza each remaining at a lower level.

The noise component extracting section 3 receives the IF signal SIF mixed with the noise nz and the residual-noise-containing signal Sig, and then extracts a high-level noise component Snzb, which is higher in level than the residual noise components Snza contained in the residual-noise-containing signal Sig, from the noise nz mixed in the IF signal SIF for output.

The noise canceling section 4 removes the high-level noise component Snza from the residual-noise-containing signal Sig to thereby cancel out the aforementioned residual noise component Snza and the high-level noise component Snzb, thus producing and then outputting a pre-signal Sm with significantly reduced noise components. For example, suppose that the noise canceling section 4 receives the residual-noise-containing signal Sig which contains each residual noise component Snza as illustrated in Fig. 2 (c) and receives each high-level noise component Snzb shown in Fig. 2 (d). In this case, these residual noise component Snza and high-level noise component Snzb are canceled out to thereby produce and output the pre-signal Sm with only lower-level and higher-frequency noise components remaining, if any, as compared with the original noise nz mixed in the IF signal SIF.

The filter section 5 is formed, for example, of a low-pass type filter (low pass filter) having a predetermined pass band. The filter section 5 filters the pre-signal Sm to thereby remove the aforementioned high-frequency noise component remaining in the pre-signal Sm, and then produces and outputs an S meter signal Smc, as illustrated in Fig. 2(f), which has a direct current voltage level indicative of a reception sensitivity.

According to the reception sensitivity detection apparatus 1 of this embodiment configured in this manner, each noise nz mixed in the IF signal SIF is divided into the residual noise component Snza having a lower level and the high-level noise component Snzb having a higher level. The residual noise component Snza and the high-level noise component Snzb are canceled out to thereby produce the pre-signal Sm with only high-frequency noise components Snzab remaining at a lower level as illustrated in Fig. 2(e). The pre-signal Sm is then filtered at the filter section 5, thereby making it possible to suppress adverse effects of the noise nz and produce a highly accurate S meter signal Smc which is indicative of a reception sensitivity (i.e., a reception field intensity) with accuracy.

Furthermore, the IF signal SIF may be mixed with high-energy impulsive noises occurring at short intervals as an external noise nz such as ignition noise arising from an automobile igniter. Even in this case, for each noise nz, the pre-signal Sm is produced in which only lower-level and higher-frequency noise components remain, and then filtered at the filter section 5. It is thus possible to suppress adverse effects of the noise nz and produce a highly accurate S meter signal Smc which is indicative of a reception sensitivity with accuracy.

Then, based on the voltage level of the S meter signal Smc produced by the reception sensitivity detection apparatus 1 of the present embodiment, gain control can be provided to the detection output. This allows for implementing a receiver with an improved S/N ratio. Furthermore, based on the voltage level of the S meter signal Smc, control can be provided to various processing circuits which are included in the receiver, thereby implementing high-quality reception operations.

As illustrated in Figs. 2(b) to 2(f), for convenience of explanation, such an exemplary operation has been described in which the IF signal SIF that is affected by impulsive noise and thereby mixed with a positive noise nz is processed to produce the S meter signal Smc with adverse effects of the noise nz suppressed. However, according to the reception sensitivity detection apparatus 1 of the present embodiment, even with a negative noise nz or positive and negative noises nz mixed, it is possible to produce the S meter signal Smc which is indicative of an accurate reception sensitivity with the adverse effects of those noises nz suppressed.

[Example]

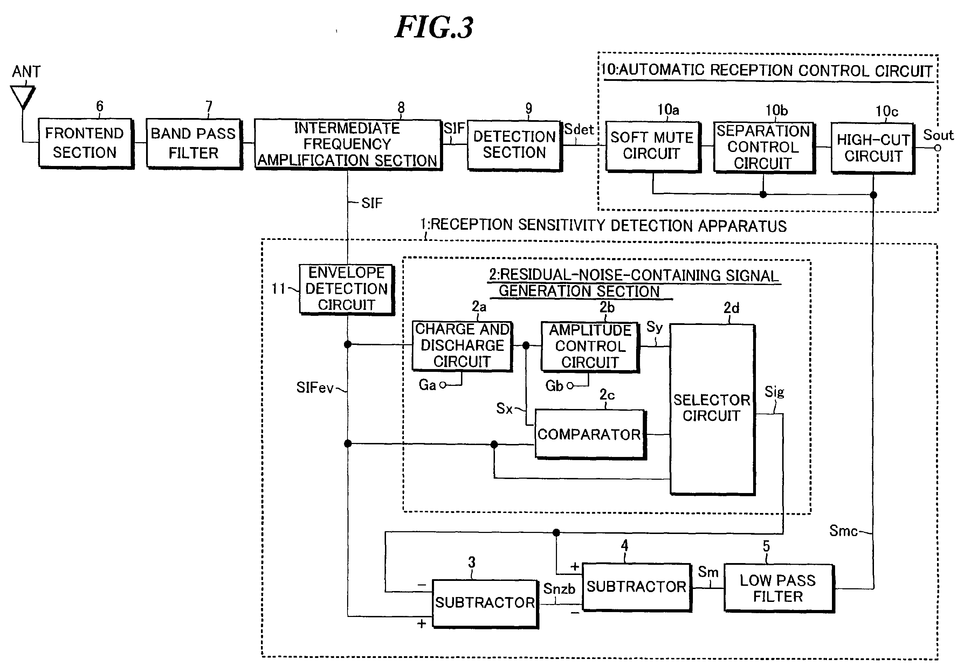

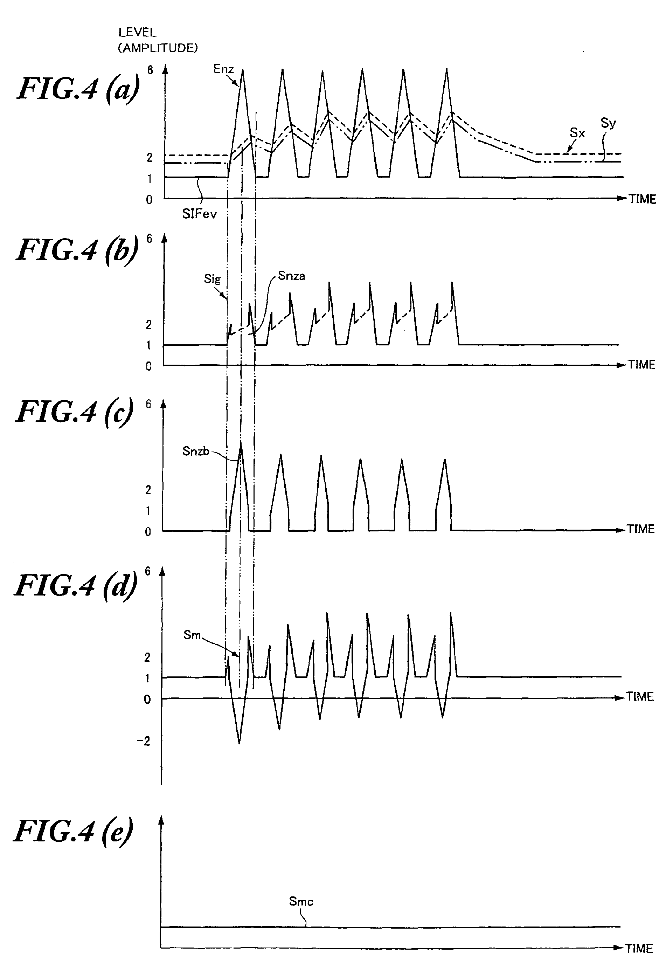

Now, with reference to Figs. 3 and 4, a description will be made to a more specific example. Fig. 3 is a block diagram illustrating the configuration of a reception sensitivity detection apparatus of the present example when installed in an FM receiver. Like or equivalent components in Fig. 3 and Fig. 2(a) are indicated with like symbols. Figs. 4 (a) to 4 (e) are schematicwaveformdiagrams of the input or output signal waveform of each component expressed on the same time axis throughout the diagrams.

[0028] - In Fig. 3, to begin with, a description will be made to the basic configuration of the FM receiver. The receiver includes: an antenna ANT for receiving an incoming radio wave such as broadcast waves; a frontend section 6 for mixing a channel selection local signal and a received high-frequency signal delivered from the antenna ANT to be thereby frequency converted into an intermediate frequency signal; a band pass filter 7 and an intermediate frequency amplification section 8 for amplifying the intermediate frequency signal within a restricted bandwidth to thereby produce an intermediate frequency signal (IF signal) SIF; a detection section 9 for FM detection of the IF signal SIF to thereby output a detection output (hereinafter referred to as the "demodulated signal") Sdet; and an automatic reception control circuit 10 for providing automatic reception control, discussed later, to the demodulated signal Sdet for output.

The automatic reception control circuit 10 has a soft mute circuit 10a, a separation control circuit 10b, and a high-cut circuit 10c, where each of the circuits 10a, 10b, and 10c performs predetermined processing on the demodulated signal Sdet depending on the voltage level of the S meter signal Smc, discussed later. This processing is done when an incoming radio wave varies in field intensity, for example, due to the distance from a sending station to the antenna ANT or when fading has occurred in an incoming radio wave by being affected, for example, by a building or geographical features in the radio transmission path. This allows the automatic reception control circuit 10 to produce and output an output signal Sout that can provide the user with high-quality reproduced sound.

More specifically, the soft mute circuit 10a is formed, for example, of an electronic attenuator (attenuation circuit). When the voltage level of the S meter signal Smc becomes less than a predetermined value by being affected by the aforementioned fading or the like, the amplification factor for the demodulated signal Sdet is gradually attenuated from 0 [dB] to thereby yield a signal with a noise component responsible for grating suppressed. The attenuated signal is then output as the output signal Sout.

When the voltage level of the S meter signal Smc becomes less than a predetermined value by being affected by the aforementioned fading or the like, the separation control circuit 10b stops stereophonic reproduction based on the demodulated signal Sdet to provide control of monophonic reproduction, and outputs the monophonically reproduced signal as the output signal Sout.

The high-cut circuit 10c is formed of a high-cut filter (i.e., low-pass filter) which can automatically adjust a cutoff frequency. The high-cut circuit 10c lowers the cutoff frequency as the voltage level of the S meter signal Smc decreases by being affected by the aforementioned fading or the like, thereby removing the high-frequency band component of the demodulated signal Sdet. The high-cut circuit 10c then outputs a signal with the high-frequency band component removed, i.e., a signal with a high noise component responsible for grating suppressed, as the output signal Sout.

Here, as illustrated, the circuits 10a, 10b, and 10c are connected in series with each other. These circuits 10a, 10b, and 10c use their respective functions mentioned above to perform their respective predetermined processing on and thereby produce the output signal Sout, which is in turn delivered to a loudspeaker (not shown).

Here, it is also acceptable to employ the circuits 10a, 10b, and 10c connected in parallel to each other relative to the output from the detection section 9 instead of the circuits 10a, 10b, and 10c connected in series with each other with respect to the output from the detection section 9. With this arrangement, the relationship between the voltage level of the S meter signal Smc and the effect provided by each of the aforementioned functions of the circuits 10a, 10b, and 10c may be analyzed in accordance with a predetermined algorithm. Any one of the circuits 10a, 10b, and 10c that provides the best listening environment for the user may be selected, so that only the output signal from that circuit selected is output as the output signal Sout.

A description will now be made to the configuration of the reception sensitivity detection apparatus 1. The reception sensitivity detection apparatus 1 of the present example has an envelope detection circuit 11 for envelope detection of the IF signal SIF produced at the intermediate frequency amplification section 8, and produces the S meter signal Smc based on an envelope signal SIFev detected.

That is, the reception sensitivity detection apparatus 1 is configured to include not only the envelope detection circuit 11 but also the residual-noise-containing signal generation section 2, a subtractor 3 corresponding to the noise component extracting section shown in Fig. 2(a), a subtractor 4 corresponding to the noise canceling section, and a low pass filter 5 corresponding to the filter section. Here, the residual-noise-containing signal generation section 2 has a charge and discharge circuit 2a, an amplitude control circuit 2b, a comparator 2c, and a selector circuit 2d.

Here, the envelope detection circuit 11 uses a rectifier diode (not shown) to rectify the IF signal SIF, and a low pass filter (not shown) having a predetermined cutoff frequency fc1 setting to smooth the rectified signal, thereby outputting the envelope signal SIFev indicative of the envelope of the IF signal SIF. Furthermore, the cutoff frequency fc1 of the aforementioned low-pass filter is set at the center frequency (carrier frequency) of the band pass filter 7 or less or at a like frequency. Accordingly, when an IF signal SIF mixed with a noise nz containing a frequency component lower than the cutoff frequency fc1 is supplied to the envelope detection circuit 11, the envelope signal SIFev is delivered therefrom which includes the original envelope of the IF signal SIF and the envelope of the noise nz.

The charge and discharge circuit 2a is formed of a low pass filter (not shown) having a cutoff frequency fc2 setting lower than the cutoff frequency fc1 of the envelope detection circuit 11 as well as an amplifier (not shown) whose amplification factor Ga can be externally adjusted. Note that the amplification factor Ga is set at a factor greater than 1 (for example, a factor of 2).

Then, based on a time constant corresponding to the reciprocal of the cutoff frequency fc2 of the aforementioned low pass filter, the circuit 2a charges and discharges the envelope signal SIFev, which is in turn amplified with the amplification factor Ga to produce a charge and discharge signal Sx for output.

That is, suppose that an envelope signal SIFev containing the envelope of the noise nz (hereinafter referred to as a "noise envelope" Enz) as illustrated with a solid line in Fig. 4 (a) is supplied from the envelope detection circuit 11 to the charge and discharge circuit 2a. In this case, the charging is initiated at the rising edge of the noise envelope Enz and the discharging is initiated at the falling edge. The resulting signal is then amplified with the amplification factor Ga to thereby produce the charge and discharge signal Sx as illustrated with a dotted line. Note that the charge and discharge signal Sx shown in Fig. 4 (a) is an example in which the amplification factor Ga has a setting of 2.

The amplitude control circuit 2b is formed of a variable gain amplifier whose amplification factor Gb can be externally adjusted, and attenuates the charge and discharge signal Sx with an amplification factor Gb to thereby output an amplitude control signal Sy expressed by Sy = Gb · Sx. Note that the amplification factor Gb is set at a positive value less than or equal to 1 except 0 (for example, a factor of 0.7).

When the amplitude control circuit 2b attenuates the charge and discharge signal Sx with the amplification factor Gb, the amplitude control signal Sy is produced which is analogous in waveform to the charge and discharge signal Sx and less in level than the charge and discharge signal Sx, as indicated with a chain double-dashed line in Fig. 4 (a). Note that the amplification factor Gb is set at a positive value less than or equal to 1 except 0 as described above to attenuate the charge and discharge signal Sx, and thus, for convenience of explanation, the amplification factor Gb is to be referred to as an attenuation factor Gb.

The comparator 2c makes a level comparison between the envelope signal SIFev and the charge and discharge signal Sx. As expressed by Equations (1) and (2) below, this allows the comparator 2c to output a switching control signal SW which takes on logic "1" when the level of the envelope signal SIFev is greater than or equal to the level of the charge and discharge signal Sx. The comparator 2c also outputs a switching control signal SW which takes on logic "0" when the level of the envelope signal SIFev is less than the level of the charge and discharge signal Sx.

[Formula 1]

$$SW = \text{``1''} \text{ when } Sx \leq SIFev \ \dots \ (1)$$

$$SW = \text{``0''} \text{ when } SIFev < Sx \ \dots \ (2)$$

The selector circuit 2d is formed, for example, of an analog switch which performs a switching operation based on the switching control signal SW. The selector circuit 2d outputs the amplitude control signal Sy when the switching control signal SW is at logic "1" or the envelope signal SIFev when the switching control signal SW is at logic "0." This allows the selector circuit 2d to output the residual-noise-containing signal Sig having a waveform of a combination of a component of the amplitude control signal Sy and a component of the envelope signal SIFev.

That is, as illustrated in Fig. 4(b), the selector circuit 2d outputs the original envelope of the IF signal SIF during a period in which the noise envelope Enz is not occurring. On the other hand, during a period in which the noise envelope Enz is occurring, the amplitude control signal Sy is delivered when the level of the noise envelope Enz is greater than the level of the charge and discharge signal Sx. As a result, a noise component is delivered which has been attenuated to a lower level due to the aforementioned charging and discharging and with the attenuation factor Gb. Furthermore, when the level of the noise envelope Enz is less than the level of the charge and discharge signal Sx during a period in which the noise envelope Enz is occurring, the noise component of the noise envelope Enz at the lower level is delivered.

Then, the residual-noise-containing signal Sig is to be produced which has a waveform of a combination of the original envelope of the IF signal SIF, a lowered-level noise component having been attenuated by the aforementioned charging and discharging and with the attenuation factor Gb, and the lowered-level noise component of the noise envelope Enz. Note that for convenience of explanation, the noise component remaining in the residual-noise-containing signal Sig is to be referred to as the residual noise component Snza.

The subtractor 3 receives the envelope signal SIFev and the residual-noise-containing signal Sig to subtract the residual-noise-containing signal sig from the envelopesignalSIFev, thereby partially extracting a high-level noise component of the noise envelope Enz (hereinafter referred to as the "high-level noise component" Snzb) for output. That is, as illustrated in Fig. 4 (c), the high-level noise component Snzb is extracted which does not contain the original envelope of the IF signal SIF with the residual noise component Snza having been removed from the noise envelope Enz.

The subtractor 4 receives the residual-noise-containing signal Sig and the high-level noise component Snzb to subtract the high-level noise component Snzb from the residual-noise-containing signal Sig. This allows for producing and delivering the pre-signal Sm in which the residual noise component Snza and the high-level noise component Snzb, which are contained in the residual-noise-containing signal Sig, have been canceled out. That is, as illustrated in Fig. 4 (d), the high-level noise component Snzb shown in Fig. 4 (c) is subtracted from the residual noise component Snza remaining at a lowered level as shown in Fig. 4 (b). This allows for producing the pre-signal Sm with most high-level noise components of the noise envelope Enz having been eliminated and only those noise components, if any, remaining at a relatively low level and a high frequency (i.e., in a narrow duration of occurrence).

The low pass filter 5 is provided in advance with a predefined filter characteristic setting in order to cut a high-frequency band of the aforementioned high-frequency noise components that are to remain in the pre-signal Sm. The low pass filter 5 filters the pre-signal Sm to thereby produce a DC voltage S meter signal Smc for output. Then, based on the voltage level of the S meter signal Smc, the low pass filter 5 controls each of the circuits 10a, 10b, and 10c within the aforementioned automatic reception control circuit 10.

A description will now be made to the operation of the reception sensitivity detection apparatus 1 configured in this manner. Here, by way of example, the description will be made to a case where the charge and discharge circuit 2a is factory-adjusted prior to shipment to have an amplification factor Ga of 2 and the amplitude control circuit 2b to have an attenuation factor Gb of 0.7.

Suppose that while an FM broadcast or the like is being received, an external high-energy impulsive noise has caused an IF signal SIF to be mixed with a noise nz, so that an envelope signal SIFev containing the noise envelope Enz of the noise nz is delivered from the envelope detection circuit 11. In this case, the charge and discharge signal Sx and the amplitude control signal Sy, as illustrated in Fig. 4 (a), are delivered from the charge and discharge circuit 2a and the amplitude control circuit 2b, respectively.

Furthermore, when the level of the envelope signal SIFev is greater than the level of the charge and discharge signal Sx, the selector circuit 2d outputs the amplitude control signal Sy based on the switching control signal SW of logic "1" delivered from the comparator 2c. On the other hand, when the level of the envelope signal SIFev is less than the level of the charge and discharge signal Sx, the selector circuit 2d outputs the envelope signal SIFev based on the switching control signal SW of logic "0" delivered from the comparator 2c. As illustrated in Fig. 4 (b), this allows the selector circuit 2d to output the residual-noise-containing signal Sig having the residual noise component Snza.

The envelope signal SIFev containing the aforementioned noise envelope Enz is also supplied to the subtractor 3, and then the residual-noise-containing signal Sig is subtracted from the envelope signal SIFev, thereby extracting the high-level noise component Snzb as illustrated in Fig. 4(c). Furthermore, the subtractor 4 produces the high-level noise component Snzb from the residual-noise-containing signal Sig. As illustrated in Fig. 4 (d), the subtractor 4 also subtracts the high-level noise component Snzb from the residual-noise-containing signal Sig, thereby producing a relatively low-level pre-signal Sm in which only a high-frequency noise component remains. Furthermore, the pre-signal Sm is filtered in the low pass filter 5 so that the aforementioned high-frequency noise component is removed. This allows for producing a DC voltage S meter signal Smc indicative of a reception sensitivity with adverse effects of the external high-energy impulsive noise suppressed. Then, the resulting signal is supplied to the automatic reception control circuit 10.

Then, based on the voltage level of the S meter signal Smc, the automatic reception control circuit 10 provides the aforementioned soft mute and separation control and high-cut processing. This allows for producing and delivering an output signal Sout which provides the user with a good listening environment even in the presence of variations in the field intensity of the incoming radio wave or fading of the incoming radio wave caused by being affected by a building or geographical features in the radio transmission path.

As described in the foregoing, according to the reception sensitivity detection apparatus 1 of the present example, the IF signal SIF mixed with the noise nz is envelope detected, thereby allowing the envelope detection circuit 11 to produce the envelope signal SIFev containing the noise envelope Enz with the high-frequency noise components of the noise nz suppressed in advance. Additionally, a low-level noise component Snza of the noise envelope Enz contained in the residual-noise-containing signal Sig produced at the selector circuit 2d and a high-level noise component Snzb of the noise envelope Enz produced at the subtractor 3 are canceled out at the subtractor 4. This allows for producing the pre-signal Sm with noise components remaining, if any, at a lower level and a higher frequency. The resulting signal is then filtered at the low pass filter 5. It is thus possible to accurately produce a DC voltage S meter signal Smc indicative of a reception sensitivity with adverse effects of noise suppressed.

Furthermore, the IF signal SIF may be mixed with an external noise nz or a high-energy impulsive noise which occurs continually at short intervals, such as ignition noise arising from an automobile igniter. Even in this case, for each noise nz, a pre-signal Sm is produced in which a lower-level and higher-frequency noise component remains, and then filtered at the low pass filter 5, thereby making it possible to produce a highly accurate S meter signal Smc.

Then, based on the voltage level of the S meter signal Smc produced at the reception sensitivity detection apparatus 1, the automatic reception control circuit 10 performs the soft mute and separation control and high-cut processing on the demodulated signal Sdet. It is thus possible to provide the user with a good listening environment even in the presence of variations in the field intensity of the incoming radio wave or fading of the incoming radio wave caused by being affected by a building or geographical features in the radio transmission path.

Furthermore, it is possible to produce an S meter signal Smc with improved accuracy by externally adjusting at least one of the amplification factor Ga of the charge and discharge circuit 2a and the attenuation factor Gb of the amplitude control circuit 2b. That is, the waveform of the residual noise component Snza to be contained in the residual-noise-containing signal Sig shown in Fig. 4 (b) will vary in accordance with the relative ratio between the amplification factor Ga of the charge and discharge circuit 2a and the attenuation factor Gb of the amplitude control circuit 2b. Moreover, the level and frequency characteristics of the noise component remaining in the pre-signal Sm shown in Fig. 4(d) can be adjusted. Thus, the S meter signal Smc delivered from the low pass filter 5 can be made into a signal that is indicative of a reception sensitivity with improved accuracy.

For example, with an amplification factor Ga of 2 and an attenuation factor Gb of 1, the waveform of the residual noise component Snza will be closer in shape to a trapezoidal wave with reduced high-frequency components. On the other hand, with the amplification factor Ga kept at 2 and an attenuation factor Gb of 0.8, which is greater than 0.7, the waveform of the residual noise component Snza will have an increased crest depression with increased high-frequency components. These adjustments to the amplification factor Ga or the attenuation factor Gb will lead to a change in the waveform of the residual noise component Snza. This in turn allows for producing the pre-signal Sm whose noise components can be removed by effectively making use of the filter characteristics of the low pass filter 5, thus providing advantageous effects.

Furthermore, the aforementioned receiver of the present example is to produce an accurate S meter signal Smc in order not to cause the automatic reception control circuit 10 to provide erroneous control. However, the S meter signal Smc can be used to provide control to various processing circuits included in the receiver, thereby allowing for receiving with high quality.

Furthermore, for convenience of explanation, as illustrated in Figs. 4(a) to 4(e), such an exemplary operation was described in which when an envelope signal SIFev contains a positive noise envelope Enz by being affected by an impulsive noise, the S meter signal Smc is produced with adverse effects of the noise envelope Enz suppressed. However, even when a negative noise envelope Enz or positive and negative noise envelopes Enz are contained in the envelope signal SIFev, the reception sensitivity detection apparatus 1 of this implementation example can suppress the adverse effects of these noise envelopes Enz to produce the S meter signal Smc indicative of an accurate reception sensitivity.

## Claims

1. A reception sensitivity detection apparatus (1) for producing a reception sensitivity signal indicative of a reception sensitivity of a received radio wave, said receiver comprising:

   residual-noise-containing signal generation means (2) for removing a noise component greater than or equal to a predetermined level from those noise components that are contained in an intermediate frequency signal and for producing a residual-noise-containing signal (Sig) with residual noise components ($S_{nza}$) each remaining at a lower level;
   noise component extracting means (3) for extracting a noise component at a high level, contained in said intermediate frequency signal, as a high-level noise component (Snzb);
   noise canceling means (4) for canceling out said residual-noise-containing signal and said high-level noise component to produce a pre-signal ($S_m$); and
   filter means (5) for filtering said pre-signal to thereby produce a direct current reception sensitivity signal indicative of said reception sensitivity.

2. The reception sensitivity detection apparatus according to claim 1, comprising envelope detection means (11) for envelope detecting the intermediate frequency signal containing said noise component to thereby produce an envelope signal having a noise envelope, and
   wherein
   said residual-noise-containing signal generation means (2), said noise component extracting means (3), and said filter means (5) performs processing on the envelope signal having said noise envelope instead of the intermediate frequency signal containing said noise component to thereby produce the direct current reception sensitivity signal indicative of said reception sensitivity.

3. The reception sensitivity detection apparatus according to claim 2, wherein said residual-noise-containing signal generation means (2) comprises :

   charge and discharge means (2a) for charging and discharging said envelope signal having said noise envelope based on a predetermined time constant and then amplifying the resulting signal with a predetermined amplification factor to thereby produce a charge and discharge signal;
   amplitude control means (2b) for attenuating said charge and discharge signal with a predetermined attenuation factor to produce an amplitude control signal;
   comparison means (2c) for making a level comparison between said charge and discharge signal and said envelope signal to output a switching control signal indicative of a comparison result; and
   selector means (2d) for performing a switching operation based on said switching control signal to produce said residual-noise-containing signal for output, said residual-noise-containing signal containing a component of said amplitude control signal when a level of said envelope signal is greater than a level of said charge and discharge signal, said residual-noise-containing signal containing a component of said envelope signal when the level of said envelope signal is less than the level of said charge and discharge signal.

4. A receiver comprising automatic reception control means (10) for providing automatic reception control to a detection output based on said reception sensitivity signal produced by the reception sensitivity detection apparatus according to any one of claims 1 to 3.

5. A reception sensitivity detection method for producing a reception sensitivity signal indicative of a reception sensitivity of a received radio wave, said method comprising:

a residual-noise-containing signal generation step for removing a noise component greater than or equal to a predetermined level from those noise components that are contained in an intermediate frequency signal and for producing a residual-noise-containing signal with residual noise components each remaining at a lower level; a noise component extracting step for extracting a noise component at a high level, contained in said intermediate frequency signal, as a high-level noise component; a noise canceling step for canceling out said residual-noise-containing signal and said high-level noise component to produce a pre-signal; and a filtering step for filtering said pre-signal to thereby produce a direct current reception sensitivity signal indicative of said reception sensitivity.

**Patentansprüche**

1. Empfangsempfindlichkeits-Erfassungsvorrichtung (1) zum Erzeugen eines Empfangsempfindlichkeitssignals, welches auf eine Empfangsempfindlichkeit von einer empfangenen Funkwelle hinweist, wobei der Empfänger enthält:

ein Element (2) zum Erzeugen eines Signals, welches ein Restrauschen enthält, zum Entfernen von einer Rauschkomponente, welche grösser oder gleich einem vorbestimmten Pegel ist, aus jenen Rauschkomponenten, welche in einem Zwischenfrequenzsignal enthalten sind, und zum Erzeugen eines Signals (Sig), welches ein Restrauschen enthält, mit Restrauschen-Komponenten ($S_{nza}$), welche jeweils auf einem niedrigeren Pegel verbleiben; ein Rauschkomponenten-Extraktionselement (3) zum Extrahieren von einer Rauschkomponente auf einem hohen Pegel, welche in dem Zwischenfrequenzsignal enthalten ist, als eine Hoch-Pegel-Rauschkomponente ($S_{nzb}$); ein Rauschunterdrückungselement (4) zum Auslöschen des Signals, welches ein Restrauschen enthält, und der Hoch-Pegel-Rauschkomponente, um ein Vorsignal ($S_m$)zu erzeugen; und ein Filterelement (5) zum Herausfiltern des Vorsignals, um somit ein Gleichstrom-Empfangsempfindlichkeits-Signal zu erzeugen, welches auf die Empfangsempfindlichkeit hinweist.

2. Empfangsempfindlichkeits-Erfassungsvorrichtung nach Anspruch 1, welche ein Hüllkurven-Erfassungselement (11) enthält, zum Erfassen der Hüllkurve des Zwischenfrequenzsignals, welches die Rauschkomponente enthält, um somit ein Hüllkurven-Signal zu erzeugen, welches eine Rausch-Hüllkurve hat, und wobei das Element (2) zum Erzeugen eines Signals, welches ein Restrauschen enthält, das Rauschkomponenten-Extraktionselement (3) und das Filterelement (5) eine Verarbeitung auf das Hüllkurven-Signal, welches die Rausch-Hüllkurve hat, anstelle auf das Zwischenfrequenzsignal, welches die Rauschkomponente enthält, durchführen, um somit das Gleichstrom-Empfangsempfindlichkeits-Signal zu erzeugen, welches auf die Empfangsempfindlichkeit hinweist.

3. Empfangsempfindlichkeits-Erfassungsvorrichtung nach Anspruch 2, wobei das Element (2) zum Erzeugen eines Signals, welches ein Restrauschen enthält, umfasst:

ein Auflade- und Entlade-Element (2a) zum Aufladen und Entladen des Hüllkurven-Signals, welches die Rausch-Hüllkurve hat, basierend auf einer vorbestimmten Zeitkonstante, und dann zum Verstärken des Restsignals mit einem vorbestimmten Verstärkungsfaktor, um somit ein Auflade- und Entlade-Signal zu erzeugen; ein Amplituden-Steuerelement (2b) zum Dämpfen des Auflade- und Entlade-Signals mit einem vorbestimmten Dämpfungsfaktor, um ein Amplituden-Steuersignal zu erzeugen; ein Vergleichselement (2c) zum Erstellen eines Pegel-Vergleichs zwischen dem Auflade- und Entlade-Signal und dem Hüllkurven-Signal, um ein Umschalt-Steuersignal auszugeben, welches auf ein Vergleichsergebnis hinweist; und

ein Auswahlelement (2d) zum Durchführen eines Umschaltbetriebes basierend auf dem Umschalt-Steuersignal, um das Signal, welches ein Restrauschen enthält, zur Ausgabe zu erzeugen, wobei das Signal, welches ein Restrauschen enthält, eine Komponente des Amplituden-Steuersignals enthält, wenn ein Pegel des Hüllkurven-Signals grösser als ein Pegel des Auflade- und Entlade-Signals ist, wobei das Signal, welches ein Restrauschen enthält, eine Komponente des Hüllkurven-Signals enthält, wenn der Pegel des Hüllkurven-Signals kleiner als der Pegel des Auflade- und Entlade-Signals ist.

4. Empfänger, welcher ein automatisches Empfangssteuerelement (10) zum Bereitstellen von einer automatischen Empfangssteuerung auf eine Erfassungsausgabe basierend auf das Empfangsempfindlichkeitssignal, welches durch die Empfangsempfindlichkeits-Erfassungsvorrichtung nach einem der Ansprüche 1 bis 3 erzeugt ist, enthält.

5. Empfangsempfindlichkeits-Erfassungsverfahren zum Erzeugen eines Empfangsempfindlichkeitssignals, welches auf eine Empfangsempfindlichkeit von einer empfangenen Funkwelle hinweist, wobei das Verfahren enthält:

einen Schritt zum Erzeugen eines Signals, welches ein Restrauschen enthält, zum Entfernen von einer Rauschkomponente, welche grösser oder gleich einem vorbestimmten Pegel ist, aus jenen Rauschkomponenten, welche in einem Zwischenfrequenzsignal enthalten sind, und zum Erzeugen eines Signals, welches ein Restrauschen enthält, mit Restrauschen-Komponenten, welche jeweils auf einem niedrigeren Pegel verbleiben;
einen Schritt zum Extrahieren von einer Rauschkomponente zum Extrahieren von einer Rauschkomponente auf einem hohen Pegel, welche in dem Zwischenfrequenzsignal enthalten ist, als eine Hoch-Pegel-Rauschkomponente;
einen Schritt zur Rauschunterdrückung zum Auslöschen des Signals, welches ein Restrauschen enthält, und der Hoch-Pegel-Rauschkomponente, um ein Vorsignal zu erzeugen; und
einen Filter-Schritt zum Herausfiltern des Vorsignals, um somit ein Gleichstrom-Empfangsempfindlichkeits-Signal zu erzeugen, welches auf die
Empfangsempfindlichkeit hinweist.

**Revendications**

1. Appareil de détection de sensibilité de réception (1) pour produire un signal de sensibilité de réception indicatif d'une sensibilité de réception d'une onde radio reçue, ledit récepteur comprenant :

des moyens de génération de signal contenant un bruit résiduel (2) pour retirer une composante de bruit supérieure ou égale à un niveau prédéterminé des composantes de bruit qui sont contenues dans un signal de fréquence intermédiaire et pour produire un signal contenant un bruit résiduel (Sig) avec des composantes de bruit résiduel (Snza) restant chacune à un niveau inférieur ;
des moyens d'extraction de composante de bruit (3) pour extraire une composante de bruit à un niveau élevé, contenue dans ledit signal de fréquence intermédiaire, en tant que composante de bruit de niveau élevé (Snzb) ;
des moyens d'annulation de bruit (4) pour annuler ledit signal contenant un bruit résiduel et ladite composante de bruit de niveau élevé pour produire un pré-signal (Sm) ; et
des moyens de filtrage (5) pour filtrer ledit pré-signal pour produire de ce fait un signal de sensibilité de réception continu indicatif de ladite sensibilité de réception.

2. Appareil de détection de sensibilité de réception selon la revendication 1, comprenant des moyens de détection d'enveloppe (11) pour détecter l'enveloppe du signal de fréquence intermédiaire contenant ladite composante de bruit pour produire de ce fait un signal d'enveloppe ayant une enveloppe de bruit, et dans lequel
lesdits moyens de génération de signal contenant un bruit résiduel (2), lesdits moyens d'extraction de composante de bruit (3) et lesdits moyens de filtrage (5) appliquent un traitement au signal d'enveloppe ayant ladite enveloppe de bruit au lieu du signal de fréquence intermédiaire contenant ladite composante de bruit pour produire de ce fait le signal de sensibilité de réception continu indicatif de ladite sensibilité de réception.

3. Appareil de détection de sensibilité de réception selon la revendication 2, dans lequel lesdits moyens de génération de signal contenant un bruit résiduel (2) comprennent :

des moyens de charge et de décharge (2a) pour charger et décharger ledit signal d'enveloppe ayant ladite enveloppe de bruit sur la base d'une constante de temps prédéterminée et amplifier ensuite le signal résultant avec un facteur d'amplification prédéterminé pour produire de ce fait un signal de charge et de décharge ;

des moyens de commande d'amplitude (2b) pour atténuer ledit signal de charge et de décharge avec un facteur d'atténuation prédéterminé pour produire un signal de commande d'amplitude ;

des moyens de comparaison (2c) pour effectuer une comparaison de niveau entre ledit signal de charge et de décharge et ledit signal d'enveloppe pour délivrer un signal de commande de commutation indicatif d'un résultat de comparaison ; et

des moyens de sélection (2d) pour effectuer une opération de commutation sur la base dudit signal de commande de commutation pour produire ledit signal contenant un bruit résiduel à délivrer, ledit signal contenant un bruit résiduel contenant une composante dudit signal de commande d'amplitude lorsqu'un niveau dudit signal d'enveloppe est supérieur à un niveau dudit signal de charge et de décharge, ledit signal contenant un bruit résiduel contenant une composante dudit signal d'enveloppe lorsque le niveau dudit signal d'enveloppe est inférieur au niveau dudit signal de charge et de décharge.

4. Récepteur comprenant des moyens de commande de réception automatique (10) pour fournir une commande de réception automatique à une sortie de détection sur la base dudit signal de sensibilité de réception produit par l'appareil de détection de sensibilité de réception selon l'une quelconque des revendications 1 à 3.

5. Procédé de détection de sensibilité de réception pour produire un signal de sensibilité de réception indicatif d'une sensibilité de réception d'une onde radio reçue, ledit procédé comprenant :

une étape de génération de signal contenant un bruit résiduel pour retirer une composante de bruit supérieure ou égale à un niveau prédéterminé des composantes de bruit qui sont contenues dans un signal de fréquence intermédiaire et pour produire un signal contenant un bruit résiduel avec des composantes de bruit résiduel restant chacune à un niveau inférieur ;

une étape d'extraction de composante de bruit pour extraire une composante de bruit à un niveau élevé, contenue dans ledit signal de fréquence intermédiaire, en tant que composante de bruit de niveau élevé ;

une étape d'annulation de bruit pour annuler ledit signal contenant un bruit résiduel et ladite composante de bruit de niveau élevé pour produire un pré-signal ; et

une étape de filtrage pour filtrer ledit pré-signal pour produire de ce fait un signal de sensibilité de réception continu indicatif de ladite sensibilité de réception.

FIG.1 (a)

FIG.1 (b)

FIG.1 (c)

FIG.1 (d)

FIG.1 (e)

PRIOR ART

## FIG.2 (a)

1:RECEPTION SENSITIVITY DETECTION APPARATUS

SIF

| RESIDUAL-NOISE-CONTAINING SIGNAL GENERATION SECTION |
| :-: |

Sig

2

| NOISE COMPONENT EXTRACTING SECTION | Snzd | NOISE CANCELING SECTION | Sm | FILTER SECTION |
| :-: | :-: | :-: | :-: | :-: |

Sm

3                4                5

## FIG.2 (b)

OCCURRING CONTINUALLY

SHORT INTERVAL

nz

SIF

THRESHOLD

TIME

## FIG.2 (c)

Snza

Sig

TIME

## FIG.2 (d)

AMPLITUDE (VOLTAGE)

Snzb

TIME

## FIG.2 (e)

Sm

Snzab

TIME

## FIG.2 (f)

AMPLITUDE (VOLTAGE)

Smc

TIME

# FIG.3

LEVEL
(AMPLITUDE)

*FIG.4 (a)*

*FIG.4 (b)*

*FIG.4 (c)*

*FIG.4 (d)*

*FIG.4 (e)*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI818468 B